Europäisches Patentamt

European Patent Office

Office européen des brevets

(19)

(11) Numéro de publication : **0 128 067**
**B1**

(12) **FASCICULE DE BREVET EUROPÉEN**

(45) Date de publication du fascicule du brevet :
**04.03.87**

(51) Int. Cl.⁴ : **A 47 C   1/026, B 60 N   1/06,**
**B 60 N   1/08, A 47 C   7/74**

(21) Numéro de dépôt : **84400927.4**

(22) Date de dépôt : **07.05.84**

(54) **Siège à dossier réglable.**

(30) Priorité : **07.06.83 FR 8309708**

(43) Date de publication de la demande :
**12.12.84 Bulletin 84/50**

(45) Mention de la délivrance du brevet :
**04.03.87 Bulletin 87/10**

(84) Etats contractants désignés :
**DE GB IT**

(56) Documents cités :
**FR-A- 1 251 593**
**GB-A- 1 285 213**

(73) Titulaire : **AUTOMOBILES CITROEN**
**62 Boulevard Victor-Hugo**
**F-92200 Neuilly-sur-Seine (FR)**

**AUTOMOBILES PEUGEOT**
**75, avenue de la Grande Armée**
**F-75116 Paris (FR)**

(72) Inventeur : **Miclot, André Louis**
**12, Place des Myrtilles**
**F-78310 Maurepas Village (FR)**

(74) Mandataire : **Boivin, Claude**
**9, rue Edouard-Charton**
**F-78000 Versailles (FR)**

EP 0 128 067 B1

## Description

La présente invention concerne des sièges, notamment les sièges de véhicules automobiles, comportant un dossier dont l'inclinaison est réglable.

Le document FR-A-1 251 593 décrit un tel siège dans lequel chacun des côtés du dossier est relié au côté correspondant de l'assise par un compas d'articulation ayant des branches solidaires respectivement du dossier et de l'assise.

L'invention a pour objet un siège de ce genre dont les possibilités de réglage sont particulièrement grandes.

Le siège selon l'invention est caractérisé en ce que l'une des branches de l'un des compas est reliée par un axe d'articulation horizontal à la branche correspondante de l'autre compas, en ce que la seconde branche de chaque compas comporte sur son profil inférieur deux évidements dans l'un ou l'autre desquels peut s'engager l'axe d'articulation, et sur son profil extérieur des crans dans l'un ou l'autre desquels peut s'engager un moyen d'arrêt porté par la première branche, et en ce que des moyens élastiques tendent à maintenir respectivement l'axe d'articulation dans l'un des évidements et le moyen d'arrêt dans l'un des crans.

Il est ainsi possible d'une part en changeant le cran dans lequel est engagé le moyen d'arrêt, de modifier l'inclinaison du dossier, et d'autre part, en changeant l'évidement dans lequel est engagé l'axe d'articulation, de modifier la profondeur de l'assise et la hauteur du dossier.

Le moyen d'arrêt peut être constitué par un élément coudé sur lequel sont attelés les moyens élastiques, dont la branche centrale s'étend parallèlement à l'axe d'articulation, et dont l'une des extrémités au moins est accouplée à un levier de commande monté pivotant sur la première branche du compas.

La première branche du compas d'articulation peut constituer un longeron de l'armature de l'assise. Ce longeron peut porter des prolongements latéraux ou dirigés vers le bas et constituant des patins de friction qui sont destinés à être engagés dans des rails de guidage solidaires de la structure du véhicule.

Dans le mode de réalisation particulier de l'invention, la première branche du compas d'articulation est creuse en étant ouverte vers le haut au moins à son extrémité portant l'axe d'articulation, et la seconde branche du compas, également creuse, est partiellement engagée dans la première et est munie à son extrémité inférieure d'un orifice accouplé à une canalisation de distribution d'air conditionné, qui est disposée dans ladite première branche du compas.

Chacune des secondes branches des compas peut être emmanchée dans ou sur un montant de l'armature du dossier, les deux montants étant réunis l'un à l'autre par une traverse munie de buses de distribution.

On a décrit ci-après, à titre d'exemple non limitatif, un mode de réalisation d'un siège de véhicule automobile selon l'invention, avec référence aux dessins annexés dans lesquels :

La Figure 1 est une vue en élévation latérale du siège ;

La Figure 2 en est une vue arrière ;

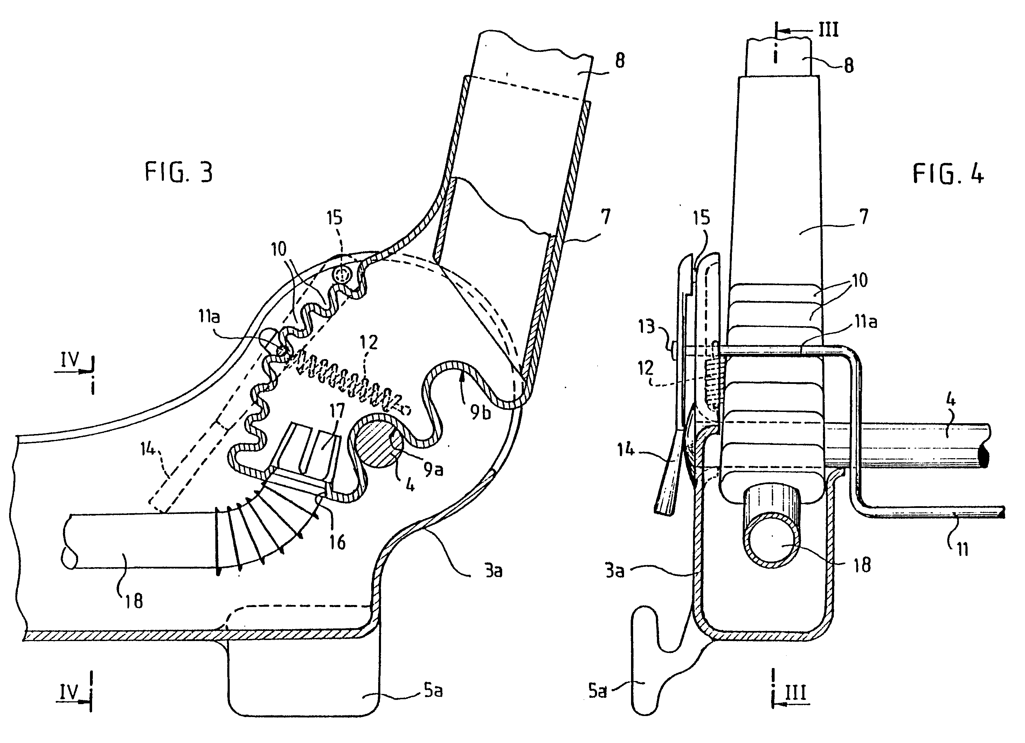

La Figure 3 est une coupe verticale d'un détail du siège, suivant III-III de la Figure 4 ;

La Figure 4 est une coupe suivant IV-IV de la Figure 3 ;

Les Figures 5 et 6 montrent diverses positions de réglage du siège.

Tel qu'il est représenté au dessin, le siège suivant l'invention comprend un dossier 1 et une assise 2. Le bâti de cette dernière comporte deux flasques latéraux creux 3a et 3b, en matière plastique, qui forment longerons et sont réunis l'un à l'autre, à leur partie arrière, par un tube horizontal 4. Chacun de ces flasques présente à sa partie inférieure des prolongements 5a ou 5b qui forment patins de friction et peuvent s'engager à l'intérieur d'un rail 6a ou 6b fixé à la structure du véhicule, en permettant ainsi une translation du siège.

La partie arrière de chacun des flasques 3a et 3b a une section en U et contient un secteur d'articulation creux 7, en matière plastique, qui peut pivoter par rapport au flasque autour de l'axe du tube 4 et dans lequel est emmanché le montant latéral correspondant 8 de l'armature du dossier. Chacun des flasques et le secteur correspondant constituent les deux branches d'un compas d'articulation.

Le profil inférieur du secteur 7 comporte deux évidements 9a ou 9b dont la section est en forme d'arc de cercle de même rayon que le tube 4 et dans l'un ou l'autre desquels le tube peut par suite s'engager. Son profil supérieur comporte des crans 10 dans lesquels peut s'engager l'une des branches d'extrémité 11a d'une barre 11 dont les extrémités sont pliées en S et dont la branche intermédiaire s'étend parallèlement au tube 4. Un ressort 12 relie la branche 11a au flasque 3a ou 3b et tend ainsi d'une part à maintenir le tube 4 dans l'évidement 9a ou 9b et d'autre part à maintenir la branche 11a de la barre 11 dans l'un des crans 10. L'extrémité de l'une des branches 11a est attelée en 13 à un levier de déblocage 14 qui est articulé en 15 sur le flasque extérieur 3a. L'extrémité de son autre branche 11a est attelée à un levier de maintien non visible au dessin et articulé sur le flasque intérieur 3b.

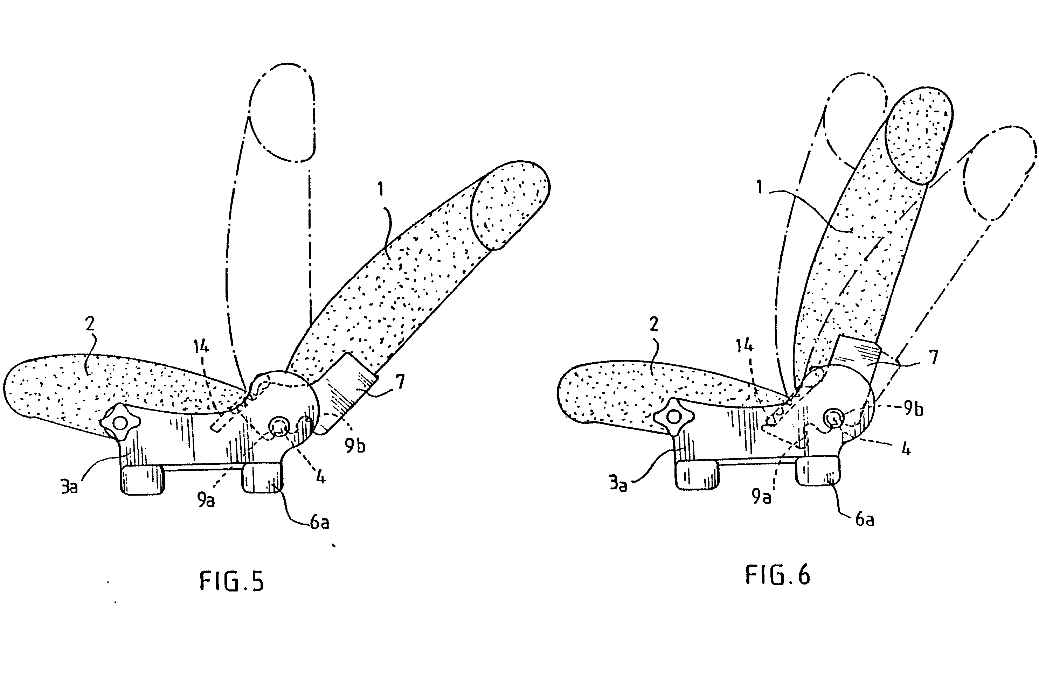

Par manœuvre du levier 14, on peut dégager simultanément les deux branches d'extrémité 11a des crans 10 dans lesquels elles étaient engagées et ainsi modifier l'inclinaison du dossier 1, comme le montrent les Figures 5 et 6.

Mais on peut également déplacer l'ensemble du dossier de façon que le tube 4 soit engagé dans les évidements 9b au lieu de l'être dans les évidements 9a, ce qui diminue à la fois la profondeur d'assise et la hauteur du dossier, comme le montre la Figure 6.

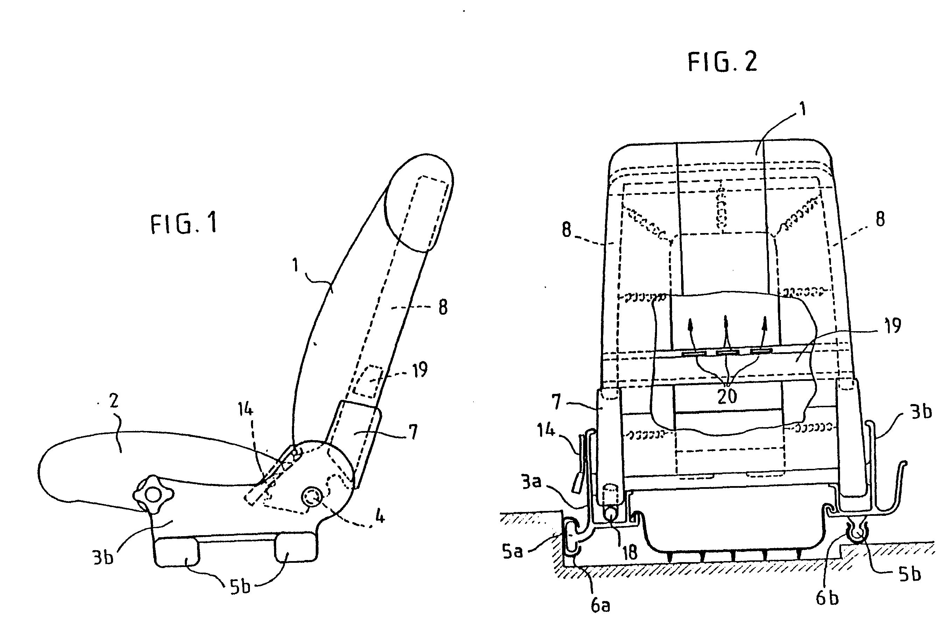

Chacun des secteurs comporte, au voisinage de son extrémité opposée au montant 8, un orifice 16 à l'intérieur duquel est connecté l'embout 17 d'une canalisation flexible 18 logée dans le flasque 3a ou 3b et reliée à un dispositif de climatisation non représenté. De leur côté, les montants 8 de l'armature du dossier sont reliés l'un à l'autre par une traverse 19 munie de buses diffusantes 20. L'air de climatisation qui arrive par la canalisation 18 est ainsi envoyé à l'intérieur du dossier 1 (Figure 2).

**Revendications**

1. Dossier réglable, notamment pour véhicule automobile, dans lequel chacun des côtés du dossier (1) est relié au côté correspondant de l'assise (2) par un compas d'articulation dont les branches sont solidaires respectivement du dossier et de l'assise, caractérisé en ce que l'une (3a ou 3b) des branches d'un des compas est reliée par un axe d'articulation horizontal (4) à la branche correspondante (3b ou 3a) de l'autre compas, en ce que la seconde branche (7) de chaque compas comporte sur son profil inférieur deux évidements (9a et 9b) dans l'un ou l'autre desquels peut s'engager l'axe d'articulation (4), et sur son profil extérieur des crans (10) dans l'un ou l'autre desquels peut s'engager un moyen d'arrêt (11a) porté par la première branche, et en ce que des moyens élastiques (12) tendent à maintenir respectivement l'axe d'articulation (4) dans l'un des évidements et le moyen d'arrêt (11a) dans l'un des crans (10).

2. Siège selon la revendication 1, caractérisé en ce que le moyen d'arrêt est constitué par un élément coudé (11) sur lequel sont attelés les moyens élastiques (12), dont la branche centrale s'étend parallèlement à l'axe d'articulation (4), et dont l'une des extrémités au moins est accouplée à un levier de commande (14) monté pivotant sur la première branche (3a ou 3b) du compas.

3. Siège selon la revendication 1 ou 2, caractérisé en ce que la première branche (3a ou 3b) du compas constitue le longeron de l'armature de l'assise.

4. Siège selon la revendication 3, caractérisé en ce que la première branche (3a ou 3b) du compas porte des prolongements latéraux ou dirigés vers le bas (5a et 5b) et constituant des patins de friction qui sont destinés à être engagés dans des rails de guidage (6a et 6b) solidaires de la structure du véhicule.

5. Siège selon l'une quelconque des revendications précédentes, caractérisé en ce que la première branche (3a ou 3b) du compas d'articulation est creuse en étant ouverte vers le haut au moins à son extrémité portant l'axe d'articulation (4) et en ce que la seconde branche (7) du compas, également creuse est partiellement engagée dans la première et est munie à son extrémité inférieure d'un orifice (16) accouplé à une canalisation (18) de distribution d'air conditionné, qui est disposée dans ladite première branche (3a ou 3b) du compas.

6. Siège selon la revendication 5, caractérisé en ce que chacune des secondes branches (7) des compas est emmanchée dans ou sur un montant (8) de l'armature du dossier (1), les deux montants (8) étant réunis l'un à l'autre par une traverse (19) munie de buses de distribution (20).

**Claims**

1. Adjustable seat back particularly for motor vehicles, in which each of the sides of the seat back (1) is connected to the corresponding side of the sitting portion (2) by hinged compasses whose legs are integral respectively with the seat back and with the sitting portion, characterized in that one (3a or 3b) of the legs of the compass is connected by a horizontal hinge pin (4) to the corresponding leg (3b or 3a) of the other compass, in that the second leg (7) of each compass has on its lower profile two recesses (9a and 9b) in one or other of which the hinge pin (4) may be engaged and on its outer profile notches (10) in one or other of which a stop means (11a) carried by the first leg may be engaged, and in that resilient means (12) tend to hold the hinge pin (4) in one of the recesses and the stop means (11a) in one of the notches (10) respectively.

2. Seat according to claim 1, characterized in that the stop means is formed by a bent element (11) to which the resilient means (12) are coupled, whose central leg extends parallel to the hinge pin (4), and one at least of the ends of which is coupled to a control lever (14) mounted for pivoting on the first leg (3a or 3b) of the compass.

3. Seat according to claim 1 or 2, characterized in that the first leg (3a or 3b) of the compass forms the longitudinal member of the frame of the sitting portion.

4. Seat according to claim 3, characterized in that the first leg (3a or 3b) of the compass has lateral or downwardly directed extensions (5a and 5b) forming friction shoes intended to be engaged in guide rails (6a and 6b) integral with the structure of the vehicle.

5. Seat according to any one of the preceding claims, characterized in that the first leg (3a or 3b) of the hinged compass is hollow, being open upwardly at least at its end carrying the hinge pin (4) and in that the second leg (7) of the compass, also hollow, is partially engaged in the first one and is provided at its lower end with an orifice (16) coupled to a conditioned air distribution duct (18), which is disposed in said first leg (3a or 3b) of the compass.

6. Seat according to claim 5, characterized in that each of the second legs (7) of the compass is fitted in or on an upright (8) of the frame of the seat back (1), the two uprights (8) being joined together by a cross piece (19) having distribution nozzles (20).

## Patentansprüche

1. Verstellbare Rückenlehne, insbesondere für Kraftfahrzeuge, bei der jede Seite der Rücklehne (1) an die entsprechende Seite des Sitzes (2) mittels eines Zirkelgelenkes angeschlossen ist, dessen Schenkel an der Rückenlehne bzw. an dem Sitz befestigt sind, dadurch gekennzeichnet, daß einer (3a oder 3b) der Zirkelgelenkschenkel mittels einer horizontalen Schwenkachse (4) an dem entsprechenden Schenkel (3b oder 3a) des anderen Zirkelgelenkes verbunden ist, daß der zweite Schenkel (7) jedes Zirkelgelenkes an seiner Unterseite zwei Ausnehmungen (9a und 9b), in deren eine oder deren andere die Schwenkachse (4) eintreten kann, und auf seiner unteren Außenseite Einschnitte (10) aufweist, in deren einen oder anderen ein Arretierorgan (11a) eintreten kann, das von dem ersten Schenkel getragen wird, und daß elastische Elemente (12) vorgesehen sind, die die Neigung haben, jeweils die Schwenkachse (4) in einer der Ausnehmungen und das Anschlagorgan (11a) in einem der Einschnitte (10) zu halten.

2. Sitz nach Anspruch 1, dadurch gekennzeichnet, daß das Arretierorgan durch ein gekröpftes Element (11) gebildet ist, an dem die elastischen Mittel (12) befestigt sind, daß sich der mittlere Stangenabschnitt des gekröpften Elementes (11) parallel zur Schwenkachse (4) erstreckt, und daß mindestens ein Ende des gekröpften Elementes mit einem Betätigungshebel (11) in Verbindung steht, der schwenkbar an dem ersten Schenkel (3a oder 3b) des Zirkelgelenkes gelagert ist.

3. Sitz nach Anspruch 1 oder 2, dadurch gekennzeichnet, daß der erste Schenkel (3a oder 3b) des Zirkelgelenkes den Längsholm des Sitzgerüstet bildet.

4. Sitz nach Anspruch 3, dadurch gekennzeichnet, daß der erste Schenkel (3a oder 3b) des Zirkelgelenkes seitliche oder nach unten gerichtete Verlängerungen (5a und 5b) trägt, die Reibschuhe bilden, die in Führungsschienen (6a und 6b) geführt sind, die fest mit dem Fahrzeug verbunden sind.

5. Sitz nach einem der vorhergehenden Ansprüche, dadurch gekennzeichnet, daß der erste Schenkel (3a oder 3b) des Zirkelgelenkes hohl und nach oben hin zumindest in dem Bereich des die Schwenkachse (4) tragenden Endes offen ist, und daß der zweite Schenkel (7) des Zirkelgelenkes, der ebenfalls offen ist und teilweise in den ersten Schenkel eingreift an seinem unteren Ende mit einer Öffnung (16) versehen ist, die an ein Verteilungssystem (18) für klimatisierte Luft angeschlossen ist, das in dem ersten Schenkel (3a oder 3b) des Zirkelgelenkes untergebracht ist.

6. Sitz nach Anspruch 5, dadurch gekennzeichnet, daß jeder der beiden zweiten Schenkel (7) des Zirkelgelenkes ein- oder aufgesteckt ist auf eine Stütze (8) des Gerüstes der Rückenlehne (1), und daß die beiden Stützen (8) miteinander durch eine Querstrebe (19) verbunden sind, die mit Ausströmdüsen (20) versehen sind.

FIG. 1

FIG. 2

0 128 067

FIG. 4

FIG. 3

FIG.5

FIG.6